# EUROPEAN PATENT SPECIFICATION

(11) **EP 1 752 319 B1**
(45) Date of publication and mention of the grant of the patent: **26.03.2008**
(21) Application number: 06012502.8
(22) Date of filing: 19.06.2006
(51) Int. Cl.: B60C 27/08

(54) **Snow chain with portions of twisted links**
Schneekette mit Strängen von gewundenen Kettengliedern
Chaîne anti-dérapante avec gaines des maillons tordus

(30) Priority: 12.08.2005 EP 05425595
(43) Date of publication of application: 14.02.2007
(73) Proprietor: Thule S.p.A., 23847 Molteno (Lecco) (IT)
(72) Inventor: Arrigoni Neri, Marco, 23811 Ballabio (LC) (IT); Farina, Luigi, 23843 Dolzago (LC) (IT)
(74) Representative: Petruzziello, Aldo

(56) References cited:
- DE-U1- 29 719 837
- US-A- 1 419 043
- US-A- 1 855 279

## Description

The present invention refers to anti-skid devices or snow chains designed to be mounted on vehicle tyres and in particular to snow chains provided with portions of chain with twisted links which, when mounted, have a limited bulk.

When a vehicle travels on a road surface covered with snow, sleet or ice, its tyres do not have a good grip and dangerous side slipping or skidding of the vehicle can occur. To avoid these problems it is customary to use anti-skid devices, commonly called snow chains.

The snow chains, normally mounted on the driving wheels of the vehicle, bite into the snow and/or the ice deposited on the road surface, increasing the tread traction and allowing the vehicle tyres to achieve a good grip.

As is known, a snow chain generally consists of two side members (chains, flexible cables, steel wires, ropes or the like) which, during use, are closed in a ring on the inner side and on the outer side of the wheel, respectively, and which will be referred to herein as the inner ring and the outer ring. These side members are connected by a series of chain portions variously disposed to achieve the tread traction, the whole being completed by a tensioning device for said members, known as a tensioner.

Snow chains normally have straight links; that is each link therein has a substantially elliptical shape and is disposed on a plane perpendicular to that of the adjacent links.

These snow chains, besides having a considerable bulk on the tread of the tyre, also give rise to a further bulk because of the joining means used. This contrasts with the increasingly great needs in modem vehicles to have extremely small spaces between of the tyre and the mechanical members of the vehicle

DE 297 19 837 discloses a snow chain according to the preamble of claim 1, comprising a triangular joining element to join the end links of chain portions.

US 1855279 and US 1419043 disclose a snow chain comprising portions of chain with twisted links.

Object of the present invention is to overcome the drawbacks of the prior art by providing a snow chain that has a limited bulk and therefore does not interfere with the mechanical members of the vehicle.

Another object of the present invention is to provide such a snow chain that is reliable and at the same time cheap and simple to produce.

Another object of the present invention is to provide a snow chain that is practical and simple to use for the user.

These objects are achieved, in accordance with the invention, with the characteristics listed in appended independent claim 1.

Preferred embodiments of the invention are apparent from the dependent claims.

The snow chain according to the invention comprises:
- an inner ring, designed to be closed on the side of the wheel destined to face toward the inside of the vehicle,
- an outer ring, designed to be closed on the side of the wheel destined to face toward the outside of the vehicle, and
- a series of portions of anti-skid chain, disposed on the tread of the tyre of the wheel, wherein at least some of said portions of chain form the join between the outer ring and the inner ring.

The portions of chain are chains with twisted links, that is chains in which each link has undergone a twisting around its major axis. These portions of chain are connected to each other by means of joining elements in the form of triangular links.

Each joining element comprises a triangular twisted link consisting of three apexes defining three substantially identical sides. Each side of the joining element comprises, with respect to the resting tyre surface, a concave portion, a convex portion and a central union portion between the concave portion and the convex portion. Each joining element is obtained starting from a flat triangular link by twisting the apexes by about 45° in the same direction.

Each apex of the joining element is defined between the concave portion of one side and the convex portion of the other side, so as to define a loop facing towards the centre of the triangle and adapted to receive the respective loop of a terminal twisted link of said portions of chain with twisted links.

The advantages of the snow chain according to the invention which provides for connection of the portions of chain with twisted links with a particular triangular joining element which has been designed so as to occupy the smallest possible space so as not to interfere with the mechanical members of the vehicle and at the same time ensure stability and safety of the connection of the twisted links, favouring disposition thereof in a flattened manner on the tread of the tyre.

Further characteristics of the invention will be made clearer by the detailed description that follows, referring to a purely exemplifying and therefore non-limiting embodiment thereof, illustrated in the appended drawings, in which:
Figure 1 is a perspective view illustrating a snow chain according to the invention, applied to a tyre of a wheel shown from the side facing towards the inside of the vehicle;
Figure 2 is an enlarged view of a detail of Figure 1 illustrating a triangular joining element for joining portions of chain to each other;
Figure 3 is a top plan view of the triangular joining element of Figure 2;
Figure 4 is a side view of the joining element taken in the direction of the arrow IV of Figure 3, in which X denotes the axis defining the resting plane of the joining element;
Figure 5 is a view from an apex of the joining element taken in the direction of the arrow V of Figure 3; and
Figure 6 is a view of one side of the joining element, taken in the direction of the arrow VI of Figure 3.

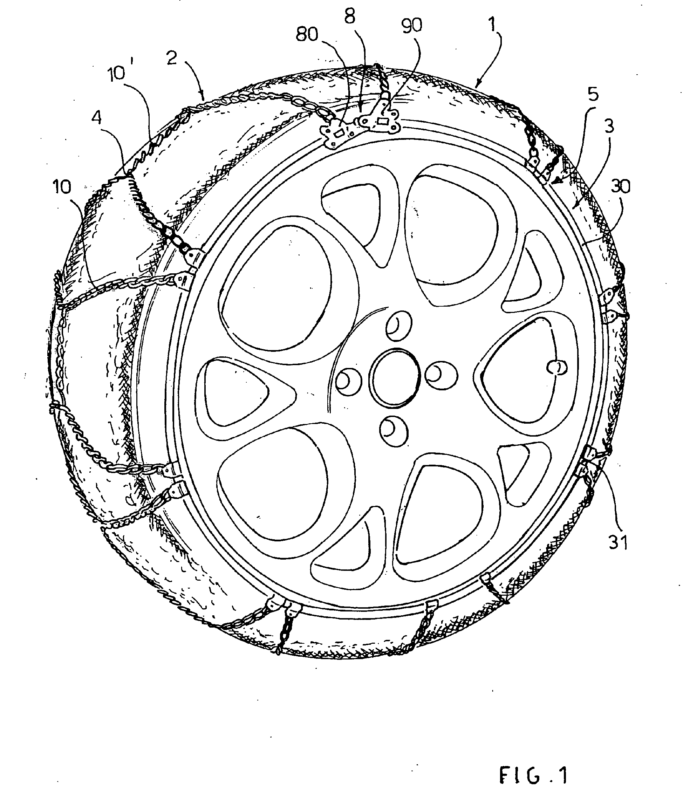

Figure 1 shows a wheel of a vehicle provided with a tyre 1 on which a snow chain, denoted as a whole with the reference numeral 2, is applied as an anti-skid device.

The chain 2 comprises:
- a member 3 which can be closed in a circle or in a ring on the side of the wheel destined to face towards the inside of the vehicle, henceforth called the inner ring 3,
- a member (not shown) which can be closed in a circle or in a ring on the side of the wheel destined to face towards the outside of the vehicle, henceforth called the outer ring, and
- a series of portions 10, 10' of anti-skid chain, variously disposed on the tread of the tyre 1 of the wheel, wherein some 10 of said portions of chain form the join between the inner ring 3 and the outer ring.

The portions of chain 10, 10' preferably comprise crosswise portions of chain 10 and lengthwise portions of chain 10'. The crosswise portions of chain 10 are disposed on the tyre 1 in a rhombus or diamond configuration and form the join between the inner ring 3 and the outer ring. The diamonds formed by the crosswise portions 10 are connected to each other by lengthwise portions 10' disposed along the middle portion of the tread of the tyre 1. Consequently, a joining element 4 is used to link together the two crosswise portions of chain 10 which form the two sides of the diamond and the portion of longitudinal chain 10'.

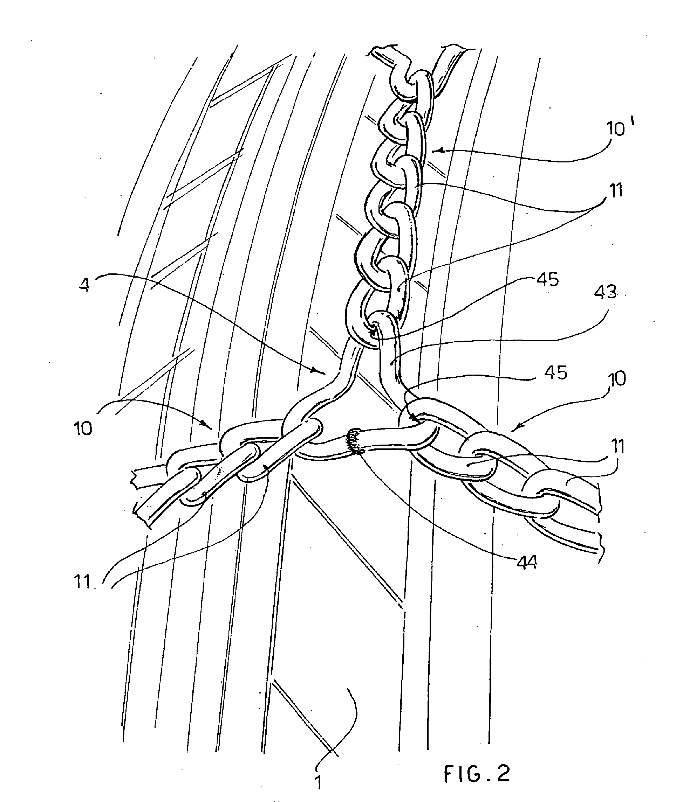

As shown better in Figure 2, the portions of chain 10, 10' consist of twisted link chains, that is to say each portion of chain 10, 10' comprises a plurality of twisted links 11, interlinked with one another. Each twisted link 11 consists of a substantially elliptical annular element, which is twisted around its major axis.

In this manner, each twisted link 11 has two opposite portions which abut on the tyre 1 and two opposite portions which protrude outward with respect to the tread of the tyre 1, acting as ice-breaking elements and helping to improve the traction on the tyre tread.

As shown better in Figure 2, the joining element 4 consists of a link of chain shaped as an equilateral triangle twisted to adapt to the twisted links 11 of the portions of chain 10, 10'. In particular, the triangular twisted link is obtained starting from a flat triangular link by twisting the apexes about 45° in the same direction.

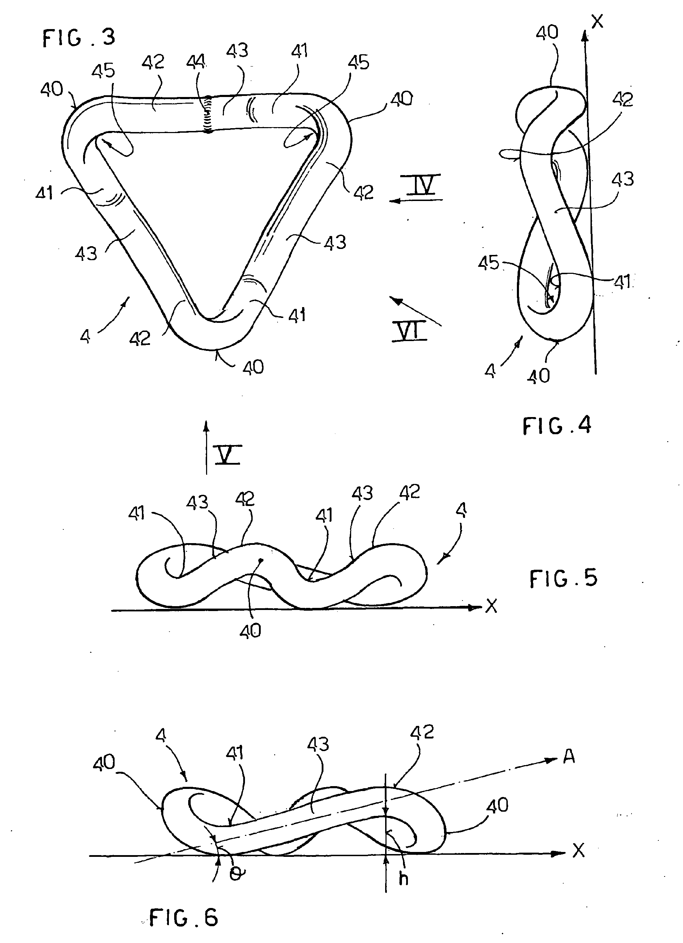

The terms concave and convex refer hereunder to the resting plane of the joining element 4, defined by the axis X (Figures 4-6). The joining element 4 is destined to rest on the surface of the tyre 1 (Figure 2) which has a circular profile. However, it must be considered that the joining element 4 is an equilateral triangle with a side of about 2.5 cm; therefore, its size is negligible compared with the diameter of the wheel of a vehicle. The surface of the tyre on which the joining element 4 rests can therefore be likened to a flat surface, like that defined by the axis X in Figures 4-6.

With reference also to Figure 3, the joining element 4 comprises three apexes 40 which define three substantially equal sides. Each side of the joining element 4 is substantially flex shaped with a concave portion 41, a convex portion 42 and a central union portion 43, substantially straight, disposed between the concave portion 41 and the convex portion 42. Each side of the joining element 4 is about 2.5 cm long, the central union portion 43 is 1 cm long and both the concave portion 41 and the convex portion 42 extend for a length of 1 cm.

Each apex 40 is defined between the concave portion 41 of one side of a joining element and the convex portion 42 of the other side. In this manner, a loop 45 facing towards the centre of the triangle and defined between the respective concave portion 41 and the respective convex portion 42 is provided at each apex 40.

The loop 45 has an optimal shape to receive a respective loop of a terminal twisted link 11 of a portion of chain 10, 10' (Figure 2). It should be noted that thanks to the particular shape of the joining element 4, the terminal links 11 of the portions of chain 10, 10' settle stably to coincide with the loops 45 of the joining element 4, keeping it pressed against the tyre with a minimum bulk. In this situation, the twisted links 11 of the portions of chain also remain pressed against the tyre, in a configuration occupying the minimum space.

As a result, the bottom edge of each concave portion 41 rests on the surface of the tyre (axis X in Figures 4-6), whilst the top edge of each convex portion 42 is the part of the joining element 4 which protrudes most with respect to the tyre.

With reference to Figure 6, the joining element 4 has been designed so that between the bottom edge of the convex portion 42 and the resting surface X, a space indicated by the segment h is defined, barely sufficient to allow the passage of a twisted link 11 of a portion of chain. Considering that the links of chain have a circular section with a diameter of about 3 mm, the segment h measures about 4 mm.

Considering that the joining element 4 also has a circular section of about 3 mm, the convex part 42 of the joining element 4 protrudes outwards, with respect to the surface of the tyre, by about 7 mm, ensuring that the snow chains occupy a minimum space.

Again with reference to Figure 6, the union central part 43 of each side of the joining element 4 has an axis A inclined by an angle θ with respect to the axis X which defines the resting surface. The angle θ is comprised between 10° and 30°, preferably 20°.

The joining element 4 preferably is formed from a metal rod which is bent into the shape of an equilateral triangle and then twisted according to the configuration previously described, leaving the two ends separate at the central part 43 of one of the sides, so as to define an opening adapted to allow insertion of twisted links 11 of chain.

Three twisted end links 11 of three portions of chain 10, 10' are inserted into the opening in the triangle of the joining element 4. At this point the ends of the metal rod which forms the joining element 4 are brought together and possibly welded to each other along a welding line 44, so as to close the triangle of the joining element 4.

Returning to Figure 1, the inner ring 3 comprises a core 31 consisting of an interrupted metal cable or of a plurality of twisted metal strands, covered with an interrupted plastic sheath 30. U-bolt connecting systems 5 are used to connect to the inner ring 3 the ends of the portions of chain 10 which form the diamonds.

The ends of the core 31 of the inner ring 3 are constrained to two engagement elements 80 and 90, in the form of flattened plates, forming part of a closing device 8 of the inner ring, per se known.

The end links of the portions of chain 10 can be connected to the outer ring by means of any per se known connecting system which is therefore not illustrated. In fact in this case the bulk of the connecting system is less influential.

Many changes and modifications of detail within the reach of a person skilled in the art can be made to the present embodiment of the invention without thereby departing from the scope of the invention set forth in the appended claims.

## Claims

1. A snow chain (2) comprising:
- an inner ring (3), designed to be closed on the side of the wheel destined to face towards the inside of the vehicle,
- an outer ring, designed to be closed on the side of the wheel destined to face toward the outside of the vehicle, and
- a series of portions of anti-skid chain (10, 10'), disposed on the tread of the tyre (1) of the wheel, wherein at least some of said portions of chain (10) form the join between the outer ring and the inner ring (3),
said portions of chain (10, 10') being connected to each other by means of joining elements (4) shaped as triangular links,
- each joining element (4) comprises a twisted triangular link consisting of three apexes (40) defining three substantially equal sides, wherein each side comprises, with respect to the resting surface on the tyre, a concave portion (41), a convex portion (42) and a central union portion (43) between the concave portion and the convex portion,
- each apex (40) being defined between the concave portion (41) of one side and the convex portion (42) of the other side, so as to define a loop (45) facing towards the centre of the triangle
**characterized in that**
said portions of chain (10, 10') are chains with twisted links (11), and
said triangular twisted links (4) have the apexes (40) twisted by about 45° in the same direction, so that said loops (45) are adapted to receive the respective loop of a twisted terminal link (11) of said portions of chain (10, 10') with twisted links, in a configuration occupying the minimum space.

2. A snow chain (2) according to claim 1, **characterized in that** said portions of chain (10, 10') with twisted links comprise:
- crosswise portions of chain (10) disposed in a diamond configuration on the tread of the tyre (1) and forming the connection between the inner ring (3) and the outer ring, and
- lengthwise portions of chain (10') disposed on the midline of the tyre and connecting said crosswise portions of chain (10),
- wherein two crosswise portions of chain (10) forming two sides of the diamond and the respective lengthwise portion of chain (10') are connected to each other by means of said joining element (4) in the form of a triangular link.

3. A snow chain (2) according to any one of the preceding claims, **characterized in that** the three concave parts (41) of said joining element (4) rest on the surface of the tyre (1) and the three convex parts (42) of said joining element (4) are the parts which protrude most from the surface of the tyre, extending about 7mm from the surface of the tyre.

4. A snow chain (2) according to any one of the preceding claims, **characterized in that**, when the joining element (4) rests on the surface of the tyre a space (h) of about 4 mm is left between the surface of the tyre and the convex part, to receive the respective loop of the twisted link (11) of the portion of chain (10, 10').

5. A snow chain (2) according to any one of the preceding claims, **characterized in that** said joining element (4) is obtained from a metal rod having a substantially circular section with a diameter of about 3 mm.

6. A snow chain (2) according to any one of the preceding claims, **characterized in that** each side of said joining element (4) has a length of about 2.5 cm, wherein the central union portion (43) is about 1 cm long and the concave portion (41) and the convex portion (42) extend for the same length.

7. A snow chain (2) according to any one of the preceding claims, **characterized in that** the central union portion (43) of each side of said joining element (4) has an axis (A) inclined by an angle (θ) between 10° and 30°, preferably 20°, with respect to the axis (X) defined by the surface of the tyre on which the joining element (4) rests.

8. A snow chain (2) according to any one of the preceding claims, **characterized in that** said joining element (4) has a weld (44) at one of the central union portions (43).

9. A snow chain (2) according to any one of the preceding claims, **characterized in that** the twisted links (11) of said portions of chain (10, 10') have a substantially elliptical shape twisted around the major axis thereof.

## Patentansprüche

1. Schneekette (2), umfassend:
- einen Innenring (3), vorgesehen, um auf der Seite des Rads geschlossen zu werden, die der Innenseite des Fahrzeugs zugewandt ist,
- einen Außenring, vorgesehen, um auf der Seite des Rads geschlossen zu werden, die der Außenseite des Fahrzeugs zugewandt ist, und
- eine Reihe von Gleitschutzkettenabschnitten (10, 10'), die auf der Lauffläche des Reifens (1) angeordnet sind, wobei mindestens einige dieser Kettenabschnitte (10) die Verbindung zwischen dem Außenring und dem Innenring (3) formen,
wobei die Kettenabschnitte (10, 10') mithilfe von Verbindungselementen (4) miteinander verbunden sind, die als dreieckige Kettenglieder geformt sind,
- jedes Verbindungselement (4) ein gewundenes dreieckiges Kettenglied aufweist, das aus drei Spitzen (40) besteht, die drei im Wesentlichen gleiche Seiten definieren, wobei jede Seite in Bezug auf die Ruhefläche auf dem Reifen einen konkaven Abschnitt (41), einen konvexen Abschnitt (42) und einen mittleren Verbindungsabschnitt (43) zwischen dem konkaven Abschnitt und dem konvexen Abschnitt aufweist,
- jede Spitze (40) zwischen dem konkaven Abschnitt (41) einer Seite und dem konvexen Abschnitt (42) der anderen Seite definiert ist, um eine Schleife (45) zu definieren, die dem Zentrum des Dreiecks zugewandt ist,
**dadurch gekennzeichnet, dass**
die Kettenabschnitte (10, 10') Ketten mit gewundenen Kettengliedern (11) sind, und
die dreieckigen gewundenen Kettenglieder (4) Spitzen (40) aufweisen, die um etwa 45° in derselben Richtung gewunden sind, sodass diese Schleifen (45) geeignet sind, die jeweilige Schleife eines gewundenen Endkettenglieds (11) der Kettenabschnitte (10, 10') mit gewundenen Kettengliedern in einer Konfiguration aufzunehmen, die den minimalen Raum einnimmt.

2. Schneekette (2) nach Anspruch 1, **dadurch gekennzeichnet, dass** die Kettenabschnitte (10, 10') mit gewundenen Kettengliedern umfassen:
- Kettenabschnitte in der Querrichtung (10), die in einer Rautenkonfiguration auf der Lauffläche des Reifens (1) angeordnet sind und die Verbindung zwischen dem Innenring (3) und dem Außenring formen, und
- Kettenabschnitte in der Längsrichtung (10'), die auf der Mittellinie des Reifens angeordnet sind und die in der Querrichtung liegenden Kettenabschnitte (10) verbinden,
- wobei zwei Kettenabschnitte in der Querrichtung (10) zwei Seiten der Raute formen und die jeweiligen Kettenabschnitte in der Längsrichtung (10') durch das Verbindungselement (4) in Form eines dreieckigen Kettenglieds miteinander verbunden sind.

3. Schneekette (2) nach einem der vorherigen Ansprüche, **dadurch gekennzeichnet, dass** die drei konkaven Abschnitte (41) des Verbindungselements (4) auf der Oberfläche des Reifens (1) ruhen und die drei konvexen Abschnitte (42) des Verbindungselements (4) die Abschnitte sind, die am meisten von der Oberfläche des Reifens abstehen, wobei sie etwa 7 mm von der Reifenoberfläche vorspringen.

4. Schneekette (2) nach einem der vorherigen Ansprüche, **dadurch gekennzeichnet, dass**, wenn das Verbindungselement (4) auf der Oberfläche des Reifens ruht, ein Raum (h) von etwa 4 mm zwischen der Reifenoberfläche und dem konvexen Abschnitt bleibt, um die jeweilige Schleife des gewundenen Kettenglieds (11) des Kettenabschnitts (10, 10') aufzunehmen.

5. Schneekette (2) nach einem der vorherigen Ansprüche, **dadurch gekennzeichnet, dass** das Verbindungselement (4) aus einer Metallstange erhalten wird, die einen im Wesentlichen kreisförmigen Querschnitt mit einem Durchmesser von etwa 3 mm aufweist.

6. Schneekette (2) nach einem der vorherigen Ansprüche, **dadurch gekennzeichnet, dass** jede Seite des Verbindungselements (4) eine Länge von etwa 2,5 cm hat, wobei der zentrale Verbindungsabschnitt (43) etwa 1 cm lang ist und der konkave Abschnitt (41) und der konvexe Abschnitt (42) sich mit der gleichen Länge erstrecken.

7. Schneekette (2) nach einem der vorherigen Ansprüche, **dadurch gekennzeichnet, dass** der mittlere Verbindungsabschnitt (43) jeder Seite des Verbindungselements (4) eine Achse (A) aufweist, die in Bezug auf die Achse (X), die durch die Reifenoberfläche definiert wird, auf welcher das Verbindungselement (4) ruht, in einem Winkel (θ) zwischen 10° und 30°, bevorzugt 20°, geneigt ist.

8. Schneekette (2) nach einem der vorherigen Ansprüche, **dadurch gekennzeichnet, dass** das Verbindungselement (4) an einem der zentralen Verbindungsabschnitte (43) eine Schweißnaht (44) aufweist.

9. Schneekette (2) nach einem der vorherigen Ansprüche, **dadurch gekennzeichnet, dass** die gewundenen Kettenglieder (11) der Kettenabschnitte (10, 10') eine im Wesentlichen elliptische Form aufweisen, die um deren Hauptachse gewunden ist.

## Revendications

1. Une chaîne à neige (2) comprenant :
- une couronne intérieure (3) conçue pour être fermée sur le côté de la roue destiné à faire face à l'intérieur du véhicule,
- une couronne extérieure conçue pour être fermée sur le côté de la roue destiné à faire face à l'extérieur du véhicule, et
- une série de brins de chaîne antidérapante (10, 10'), disposés sur la bande de roulement du pneumatique (1) de la roue, dans laquelle au moins quelques uns desdits brins de chaîne (10) forment la jonction entre la couronne extérieure et la couronne intérieure (3),
lesdits brins de la chaîne (10, 10') étant raccordés les us aux autres au moyen d'éléments de raccordement (4) sous la forme de maillons triangulaires,
- chaque élément de raccordement (4) comprend un maillon triangulaire tordu composé de trois sommets (40) définissant trois côtés essentiellement égaux, dans lequel chaque côté comprend eu égard à la surface restante sur le pneumatique, une partie concave (41), une partie convexe (42) et une partie d'union centrale (43) entre la partie concave et la partie convexe,
- chaque sommet (40) étant défini entre la partie concave (41) d'un côté et la partie convexe (42) de l'autre côté de manière à définir une boucle (45) faisant face au centre du triangle
**caractérisé en ce que**
lesdits brins de la chaîne (10, 10') sont des chaînes avec des maillons tordus (11) et
lesdits maillons triangulaires tordus (4) ont les sommets (40) tordus d'environ 45° dans la même direction de sorte que lesdites boucles (45) sont adaptées pour recevoir la boucle respective d'un maillon terminal tordu (11) desdits brins de chaîne (10, 10') avec les maillons tordus dans une configuration occupant le minimum d'espace.

2. Une chaîne à neige (2) selon la revendication 1 **caractérisée en ce que** lesdits brins de chaîne (10, 10') avec les maillons tordus comprennent :
- des brins transversaux de chaîne (10) disposés dans une configuration de diamant sur la bande de roulement du pneumatique (1) et formant le raccordement entre la couronne intérieure (3) et la couronne extérieure et
- des brins longitudinales de chaîne (10') disposés sur l'axe central du pneumatique et raccordant lesdits brins transversales de la chaîne (10),
- dans laquelle les deux brins transversaux de la chaîne (10) formant deux côtés du diamant et la partie longitudinale respective de la chaîne (10') sont raccordées l'un à l'autre au moyen dudit élément de raccordement (4) sous la forme d'un maillon triangulaire.

3. Une chaîne à neige (2) selon l'une des revendications précédentes **caractérisée en ce que** les trois parties concaves (4) dudit élément de raccordement (4) reposent sur la surface du pneumatique (1) et les trois parties convexes (42) dudit élément de raccordement (4) sont les parties qui ressortent le plus de la surface du pneumatique, s'étendant d'environ 7 mm de la surface du pneumatique.

4. Une chaîne à neige (2) selon l'une des revendications précédentes **caractérisée en ce que** lorsque l'élément de raccordement (4) repose sur la surface du pneumatique, il reste un espace (h) d'environ 4 mm entre la surface du pneumatique et la partie convexe pour recevoir la boucle respective du maillon tordu (11) du brin de chaîne (10, 10').

5. Une chaîne à neige (2) selon l'une des revendications précédentes **caractérisée en ce que** ledit élément de raccordement (4) est obtenu à partir d'une tige de métal ayant une section essentiellement circulaire avec un diamètre d'environ 3 mm.

6. Une chaîne à neige (2) selon l'une des revendications précédentes **caractérisée en ce que** ledit élément de raccordement (4) a une longueur d'environ 2,5 cm, dans laquelle la partie d'union centrale (43) est d'environ 1 cm de longueur et la partie concave (41) et la partie convexe (42) s'étendent de la même longueur.

7. Une chaîne à neige (2) selon l'une des revendications précédentes **caractérisée en ce que** la partie d'union centrale (43) de chaque côté dudit élément de raccordement (4) a un axe (A) incliné d'un angle (θ) entre 10° et 30°, de préférence 20°, par rapport à l'axe (X) défini par la surface du pneumatique sur laquelle repose l'élément de raccordement (4).

8. Une chaîne à neige (2) selon l'une des revendications précédentes **caractérisée en ce que** ledit élément de raccordement (4) a une soudure (44) sur une des parties d'union centrales (43).

9. Une chaîne à neige (2) selon l'une des revendications précédentes **caractérisée en ce que** les maillons tordus (11) desdits brins de chaîne (10, 10') ont une forme essentiellement elliptique tordue autour de l'axe principal de celle-ci.
